**Europäisches Patentamt**

**European Patent Office**

**Office européen des brevets**

(19)

(11) Numéro de publication : **0 286 514 B1**

(12) **FASCICULE DE BREVET EUROPEEN**

(45) Date de publication du fascicule du brevet :
06.03.91 Bulletin 91/10

(51) Int. Cl.⁵ : **B65G 17/26, B65G 15/10**

(21) Numéro de dépôt : 88400778.2

(22) Date de dépôt : 30.03.88

(54) **Convoyeur à plaques permettant notamment le transport de récipients.**

(30) Priorité : 07.04.87 FR 8704894

(43) Date de publication de la demande :
12.10.88 Bulletin 88/41

(45) Mention de la délivrance du brevet :
06.03.91 Bulletin 91/10

(84) Etats contractants désignés :
AT BE CH DE ES GB IT LI LU NL SE

(56) Documents cités :
EP-A- 0 122 606
US-A- 2 884 117
US-A- 3 590 994
US-A- 3 857 474

(73) Titulaire : Dardaine Industries
Allée de la Garenne Z.I. Nord
F-28106 Dreux (FR)

(72) Inventeur : Le Naour, Laurent
5 Rue de la Tuilerie
F-28500 Vernouillet -Dreux (FR)

(74) Mandataire : Durand, Yves Armand Louis et al
Cabinet Z. Weinstein 20, Avenue de Friedland
F-75008 Paris (FR)

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

## Description

La présente invention a essentiellement pour objet un convoyeur à plaques permettant le transport de récipients possédant des formes et/ou des dimensions quelconques destinés par exemple à être conditionnés.

On connaît déjà des convoyeurs à chaînes ou analogues parallèles sans fin portant des plaques transversales munies d'orifices susceptibles de recevoir des récipients ou gobelets qui peuvent ainsi être transportés en ligne d'un point à un autre.

Toutefois, ce genre de convoyeurs présente des inconvénients en ce sens que les plaques transversales ne peuvent convenir que pour une forme particulière de récipients, et que, lorsqu'on désire transporter des récipients d'une autre forme, il faut nécessairement changer toutes les plaques transversales et les remplacer par d'autres plaques pourvues d'orifices correspondant à l'autre forme de récipients à transporter.

Ceci, comme on le comprend, est coûteux sur le plan de la main d'oeuvre et également en raison du fait qu'il faut prévenir pour le convoyeur plusieurs jeux de plaques susceptibles de convenir pour des récipients de formes différentes.

Par ailleurs, on connaît d'après le document US-A-3 857, 474 un convoyeur à plaques qui se composent chacune de deux demi-plaques mobiles l'une par rapport à à l'autre, comme décrit dans le préambule de la revendication 1.

La présente invention a pour but de proposer un convoyeur de ce type mais qui présente une plus grande souplesse et une meilleure fiabilité de fonctionnement pour ce qui concerne en particulier l'actionnement des demi-plaques composant chaque plaque et servant à maintenir ou relâcher les récipients.

A cet effet, l'invention a pour objet un convoyeur à plaques permettant le transport d'objets, tels que par exemple des récipients, et du type comprenant deux paires de chaînes ou analogues parallèles sans fin auxquelles sont respectivement attelées des plaques transversales susceptibles de recevoir lesdits objets et se composant chacune de deux demi-plaques qui peuvent être entraînées simultanément et également séparément pour saisir ou relâcher les objets, caractérisé en ce que chaque demi-plaque comporte à ses deux extrémités un élément formant joue monté pivotant par l'intermédiaire d'un axe sur un support solidaire des chaînes, l'ouverture ou la fermeture par pivotement de ces demi-plaques est assurée par un bras ou analogue actionnant les extrémités des demi-plaques et lui-même commandé par une première barre supportant des manchons contenant des poussoirs montés coulissant dans ces manchons et supportés par une deuxième barre.

Suivant une autre caractéristique de l'invention, le bras précité se termine par une extrémité sensiblement en forme d'étrier dans lequel se situent les extrémités des demi-plaques et comporte une lumière coulissant sur un doigt ou analogue solidaire du bâti du convoyeur.

Les demi-plaques pourront donc s'ouvrir et se fermer pour permettre le déplacement des récipients orthogonalement aux demi-plaques afin de leur faire subir telle ou telle opération.

Selon encore une autre caractéristique de l'invention, les manchons et leurs poussoirs associés susceptibles d'agir sur les récipients portés par les demi-plaques peuvent être animés d'un mouvement de translation verticale relatif par un arbre moteur commandant la première et la deuxième barre précitées par l'intermédiaire d'un système de biellettes ou leviers articulés.

Mais d'autres caractéristiques et avantages de l'invention apparaîtront mieux dans la description détaillée qui suit et se réfère aux dessins annexés, donnés uniquement à titre d'exemple, et dans lesquels :

La figure 1 est une vue schématique en élévation d'une machine comportant un convoyeur conforme aux principes de l'invention ;

La figure 2 est une vue partielle de dessus et en partie en coupe de ce convoyeur ;

La figure 3 est une vue similaire à la figure 2 et montrant, comme la figure 2, des récipients saisis par les demi-plaques, les récipients illustrés sur la figure 3 étant d'un diamètre plus grand que ceux illustrés par la figure 2 ;

La figure 4 est une vue en coupe verticale et partielle de deux demi-plaques et montrant l'articulation de ces demi-plaques sur les chaînes du convoyeur ;

La figure 5 est une vue partiellement en coupe et en bout de deux demi-plaques, suivant la flèche V de la figure 2, les demi-plaques étant montrées en position ouverte ;

La figure 6 est une vue en bout du convoyeur suivant la flèche VI de la figure 1 ;

La figure 7 est une vue suivant la flèche VII de la figure 6 ; et

Les figures 8 à 12 sont des vues schématiques illustrant les phases successives de déplacement d'un récipient au travers des demi-plaques pour qu'il soit appliqué contre un poste de thermoscellage ou de marquage par exemple.

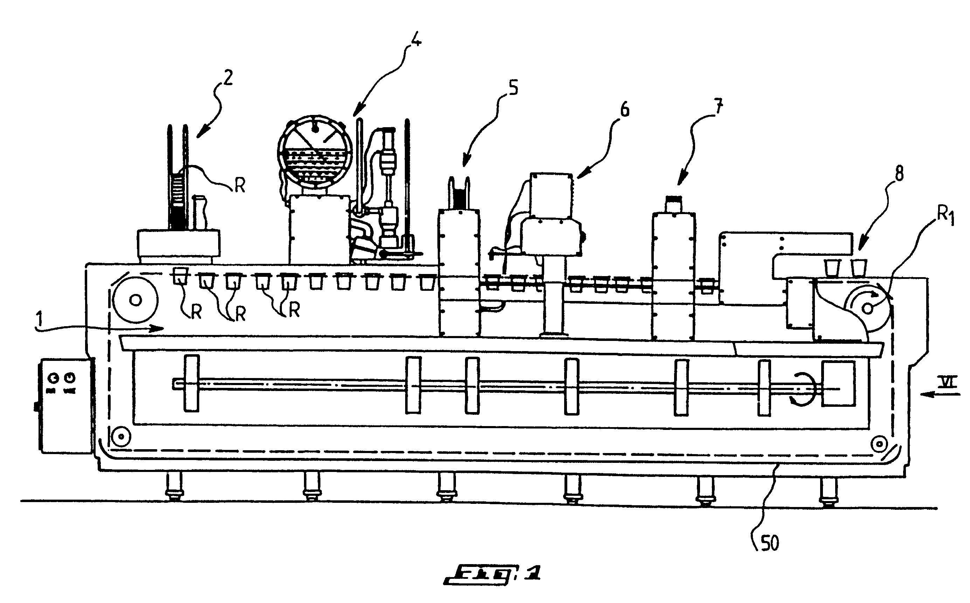

Suivant un exemple de réalisation, et en se reportant notamment à la figure 1, un convoyeur 1 conforme à l'invention peut équiper une machine de conditionnement de récipients, laquelle machine comprend successivement au-dessus du convoyeur 1, et comme connu en soi, un poste 2 de dépilage de récipients R, un poste 4 de remplissage de ces récipients, un poste 5 de dépilage d'opercules, un poste 6 de thermoscellage, un poste 7 de marquage des récipients R, et un poste 8 de transfert des récipients R.

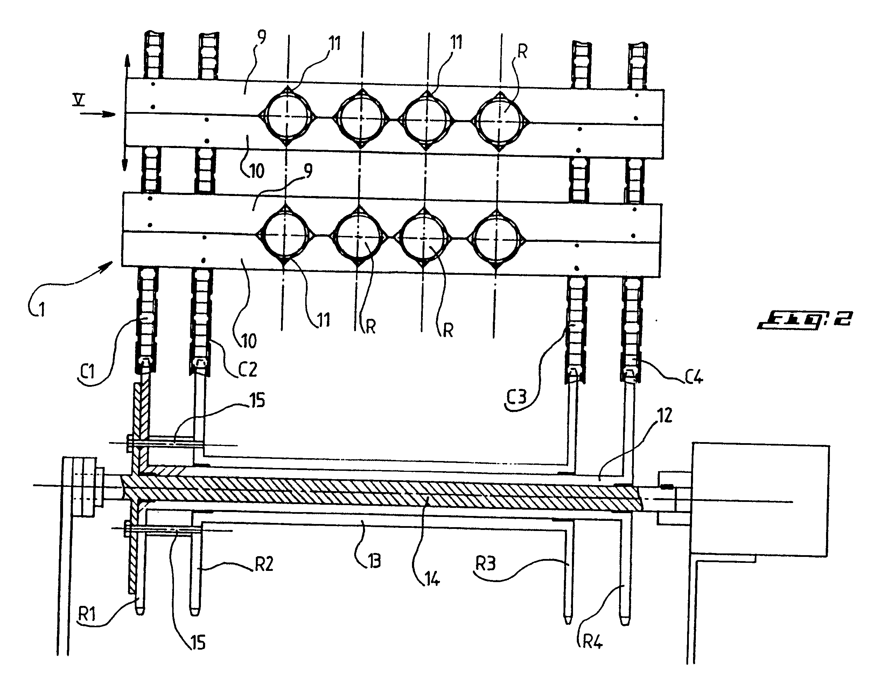

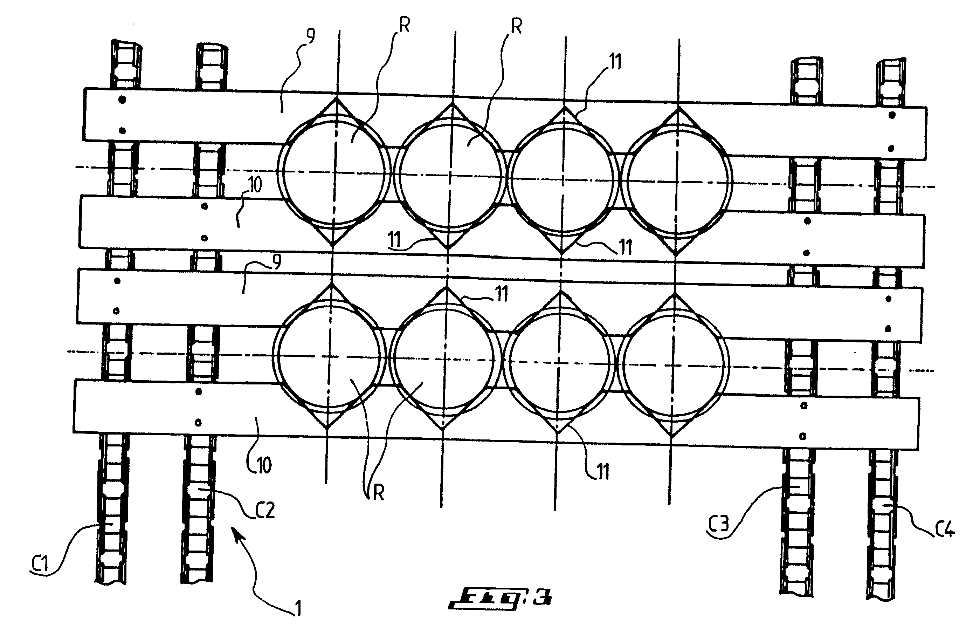

Selon cette invention, et en se reportant plus particulièrement aux figures 2 et 3, on voit que le convoyeur comprend deux paires de chaînes parallèles sans fin, et à savoir une paire de chaînes extérieures $C_1$, $C_4$ et une paire de chaînes intérieures $C_2$, $C_3$. Sur ces deux paires de chaînes sont fixées des plaques transversales constituées chacune de deux demi-plaques 9 et 10 pourvues chacune d'échancrures 11 dans leurs bords en vis-à-vis de façon à retenir entre elles les récipients R.

Plus précisément, les demi-plaques 9 sont attelées par leurs extrémités à la paire de chaînes $C_1$, $C_4$, tandis que les demi-plaques 10 sont attelées à la paire de chaînes $C_2$, $C_3$.

La paire de chaînes $C_1$, $C_4$ passe autour de roues dentées $R_1$, $R_4$ solidaires d'un manchon 12, tandis que les chaînes $C_2$, $C_3$ passent autour de roues dentées $R_2$, $R_3$ solidaires d'un manchon 13 coaxial au manchon 12, comme on le voit bien sur la figure 2. Les deux manchons 12 et 13 sont calés sur un arbre 14, qui est l'arbre d'entraînement du convoyeur 1 de sorte que les paires de chaînes $C_1$, $C_4$ et $C_2$, $C_3$ peuvent être entraînées simultanément. Il est à noter ici que les manchons 12 et 13 sont solidaires en rotation l'un de l'autre grâce à un moyen de liaison démontable, tel que par exemple une vis 15, qui, lorsqu'elle est dévissée, permet l'entraînement d'une paire de chaînes $C_1$, $C_4$, par rapport à l'autre $C_2$, $C_3$, de sorte qu'on pourra ainsi écarter ou rapprocher les demi-plaques 9 et 10 pour qu'elles puissent saisir des récipients R de forme ou diamètre quelconque et plus ou moins important, comme on le voit bien sur les figures 2 et 3.

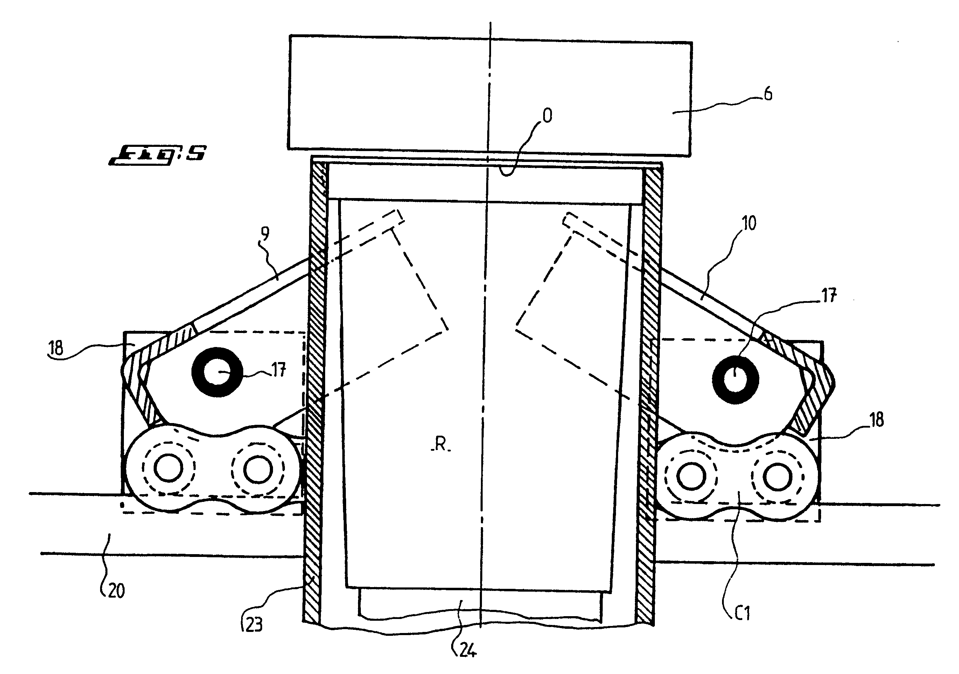

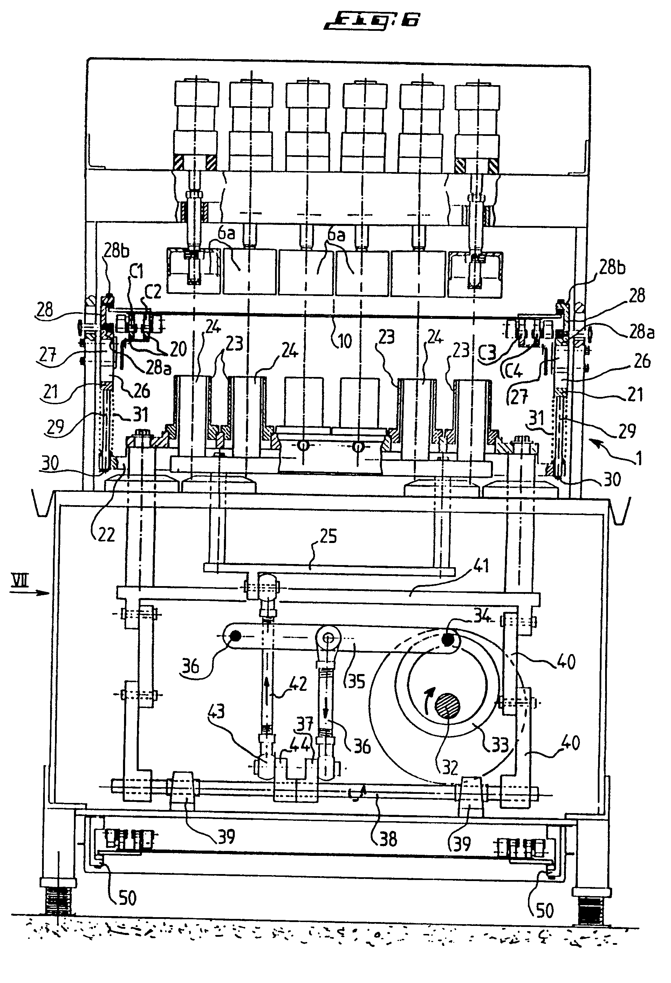

En se reportant maintenant aux figures 4 et 5, on voit que, conformément à l'invention, les demi-plaques 9, 10 sont fixées de manière pivotante par leurs extrémités sur les chaînes autour d'un axe transversal auxdites chaînes.

Plus précisément, les extrémités de chaque demi-plaque 9, 10 comportent chacune un élément formant joue, flasque ou analogue 16 pivotant par l'intermédiaire d'un axe 17 sur un support 18 solidaire des chaînes $C_1$, $C_2$, $C_3$ et $C_4$. Le support 18 est fixé latéralement aux chaînes par tout moyen approprié quelconque, tel que par exemple un axe 19 comme on le voit bien sur la figure 4, étant entendu que les chaînes passant autour des roues $R_1$, $R_2$, $R_3$ et $R_4$ glissent, comme cela est connu en soi, sur des rails 20.

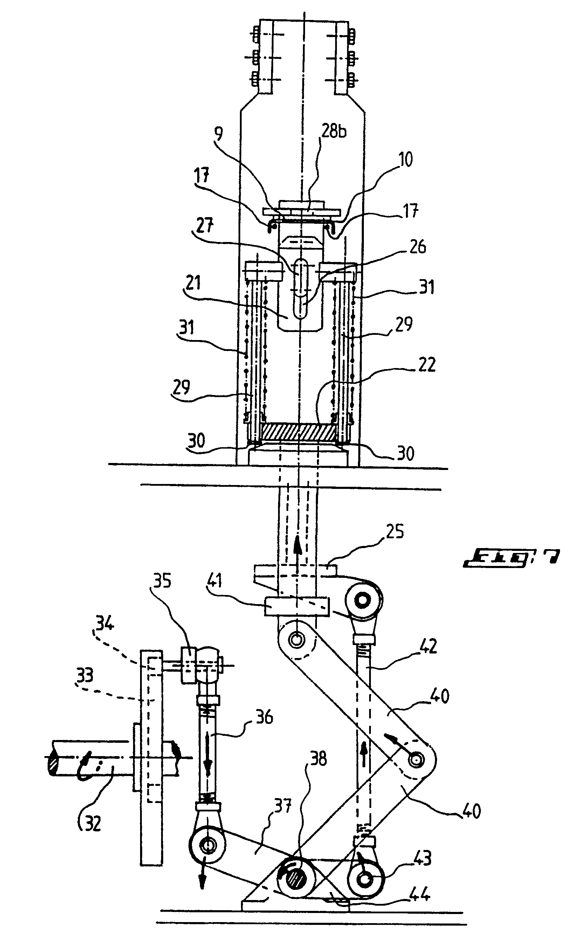

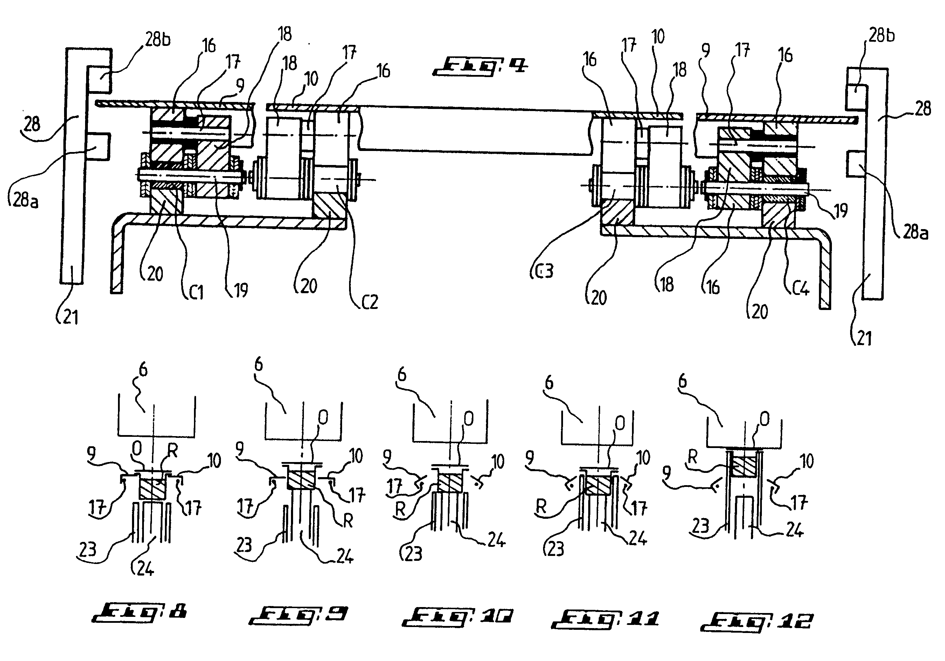

Ainsi, comme on le comprend, les demi-plaques 9, 10 du convoyeur selon l'invention peuvent non seulement se translater horizontalement l'une par rapport à l'autre pour recevoir un récipient de forme quelconque, mais peuvent également pivoter sur les chaînes autour de l'axe 17 formant charnière de façon à permettre le déplacement des récipients R au travers desdites demi-plaques, comme on l'expliquera maintenant en détail en se reportant plus particulièrement aux figures 6 et 7, étant entendu qu'en position fermée, les demi-plaques reposent sur les chaînes sous l'effet de la gravité.

L'ouverture et la fermeture par pivotement des demi-plaques sont assurées par des bras ou analogues 21 actionnant les deux extrémités des demi-plaques, lesquels bras sont commandés par une première barre 22 supportant des manchons ou fourreaux 23 contenant des poussoirs 24 montés coulissant dans lesdits manchons et supportés par une deuxième barre 25.

Plus précisément, chaque bras 21 comporte une lumière 26 coulissant sur un doigt 27 solidaire du bâti du convoyeur 1.

L'extrémité des bras 21 présente sensiblement une forme d'étrier 28 dans lequel viennent se loger les extrémités des demi-plaques 9, 10, comme on le voit bien sur les figures 4 et 6.

On comprend que le mouvement vertical du bras 21 formant en quelque sorte un poussoir, provoquera, en montant, l'ouverture des demi-plaques 9, 10 par la branche inférieure 28a de l'étrier et, en descendant, la fermeture de ces demi-plaques par la branche supérieure 28b de l'étrier 28.

Le bras ou poussoir 21 se prolonge par un axe 29 qui peut coulisser par son extrémité inférieure dans la première barre 22 supportant les manchons 23, étant entendu que l'axe 29 se termine par une butée 30 et qu'un ressort 31 est interposé entre la première barre 22 et le bras ou poussoir 21.

La première barre 22 de support des manchons 23 et la deuxième barre 25 de support et d'actionnement des poussoirs 24 dans les manchons 23 sont actionnées par un système de biellettes ou leviers articulés que l'on voit bien sur les figures 6 et 7.

Sur ces figures, on a montré en 32 un arbre moteur comportant une came creuse et excentrée 33 dans laquelle roule un galet 34 situé à l'extrémité d'un levier 35 dont l'autre extrémité est articulée en 36 sur le bâti du convoyeur 1. Sur le levier 35 est articulé une biellette 36 elle-même articulée sur une autre biellette 37 solidaire en rotation d'un arbre 38 supporté par des paliers 39 solidaires du bâti du convoyeur 1. Cet arbre 38 entraîne des biellettes 40 formant un angle entre elles comme on le voit bien sur la figure 7 et susceptibles de commander le déplacement vertical des manchons ou fourreaux 23. Plus précisément, les biellettes 40 agissent sur une traverse 41 solidaire de la première barre 22 portant lesdits manchons.

Sur la deuxième barre 25 portant les poussoirs 24 coulissant dans les fourreaux 23, est articulée une biellette 42 elle-même articulée en 43 sur une petite biellete 44 solidaire en rotation de l'arbre 38 porté par les paliers 39.

On comprend donc que la rotation de l'arbre moteur 32 permettra, grâce au système décrit ci-dessus un déplacement relatif des manchons 23 et de leurs poussoirs associés 24.

Mais, pour une meilleure compréhension du convoyeur selon cette invention, on expliquera maintenant son fonctionnement en se reportant plus particulièrement aux figures 8 à 12. Ce fonctionnement sera expliqué dans le cadre d'une utilisation du convoyeur selon cette invention avec la machine illustrée sur la figure 1.

On adapte tout d'abord les demi-plaques 9 et 10 à la forme et à la dimension des récipients R au poste de dépilage 2.

Cette adaptation se fait, comme expliqué précédemment, en agissant sur la vis 15 (figure 2) permettant d'actionner séparément la paire de chaînes $C_1$, $C_4$ et la paire de chaînes $C_2$, $C_3$.

Les récipients R, quelle que soit leur forme, c'est-à-dire ronde ou polygonale telle que par exemple carrée, seront donc correctement maintenus entre les demi-plaques et passeront successivement sous le poste 4 pour être remplis, sous le poste 5 permettant la dépose d'un opercule et sous le poste 6 où les opercules devront être thermoscellés sur le sommet de récipients qui, comme connu en soi, comportent un rebord.

A ce stade, et comme on le voit sur la figure 8, les poussoirs 24 doivent monter pour pouvoir pousser les récipients R en direction du poste de thermoscellage 6 constitué par une pluralité de têtes de thermoscellage, comme on le voit en 6a sur la figure 6.

Plus précisément, et comme on peut le comprendre sur cette figure, la première barre 22 supportant les manchons 23 monte et les ressorts 31 sont de ce fait légèrement comprimés, ce qui provoque l'entraînement vers le haut des bras 21 guidés par les doigts 27.

Dès lors, grâce à la branche 28a de l'étrier 28, les demi-plaques 9 et 10 vont être ouvertes, étant entendu que les poussoirs 24 auront préalablement dégagé les récipients R des demi-plaques 9 et 10, comme on le voit sur la figure 9.

On voit sur la figure 10 que les demi-plaques 9, 10 sont ouvertes et que les manchons 23 ont continué leur course vers le haut, puisque la première barre 22 poursuit elle aussi sa course vers le haut.

Ainsi, comme on le voit sur la figure 11, les manchons 23 passent au travers des demi-plaques 9 et 10 précédemment ouvertes et viennent s'appliquer, par leur extrémité supérieure, sur le dessous du rebord des récipients R, comme cela est visible sur la figure 11. Puis, comme cela est visible sur les figures 12 et 5, les manchons 23 poussent le récipient R contre les têtes de thermoscellage 6 qui vont permettre la fixation de l'opercule 0 sur le dessus des récipients R.

Il est à noter ici, et comme on le voit sur la figure 12, que les poussoirs 24 ont été arrêtés, alors que les manchons 23 ont continué leur course vers le haut, étant entendu que les ressorts 31 compensent la course de la barre 22.

Le thermoscellage des opercules étant terminé, la barre 22 descend, les bras 21 restent dans leur position tant que les ressorts 31 sont comprimés, et la barre 22 entraîne les axes 29 par l'intermédiaire des butées 30. Il est à noter ici que la barre 22, en descendant, provoque bien sûr la descente des manchons 23 et donc des récipients R qui viennent se déposer sur le poussoir 24.

Lors de cette descente, les bras 21, par l'intermédiaire de la branche supérieure 28b de l'étrier 28 assurent la fermeture des plaques 9, 10 dont les échancrures 11 prendront le relais des manchons 23 pour supporter les récipients R par leurs rebords.

On a donc réalisé suivant l'invention un convoyeur 1 comportant des demi-plaques mobiles en translation horizontale et en rotation de façon à permettre respectivement l'adaptation du convoyeur à n'importe quelle forme ou dimension de récipients à conditionner, ainsi que le déplacement vertical de ces récipients pour les amener à un poste de thermoscellage ou à un autre poste quelconque, sans pour cela sortir du cadre de l'invention.

C'est ainsi que le convoyeur selon l'invention pourrait être parfaitement adapté au simple transport de récipients de forme quelconque d'un point à un autre.

Enfin on ajoutera que le convoyeur selon cette invention peut comporter divers moyens accessoires tels que par exemple des rails 50 parallèles au brin inférieur du convoyeur pour empêcher l'ouverture des demi-plaques 9, 10 au retour (voir figures 1 et 6).

**Revendications**

1. Convoyeur à plaques permettant le transport d'objets, tels que par exemple des récipients (R), et du type comprenant deux paires de chaînes ou analogues parallèles sans fin ($C_1$-$C_4$, $C_2$-$C_3$) auxquelles sont respectivement attelées des plaques transversales susceptibles de recevoir lesdits objets et se composant chacune de deux demi-plaques (9, 10) qui peuvent être entraînées simultanément et également séparément pour saisir ou relâcher les objets, caractérisé en ce que chaque demi-plaque (9, 10) comporte à ses deux extrémités un élément formant joue (16) monté pivotant par l'intermédiaire d'un axe (17) sur un support (18) solidaire des chaînes, l'ouverture ou la fermeture par pivotement de ces demi-plaques est assurée par un bras ou analogue (21) actionnant les extrémités des demi-plaques et lui-même commandé par une première barre (22) supportant des manchons (23) contenant des poussoirs (24) montés coulissant dans ces manchons et supportés par une deuxième barre (25).

2. Convoyeur selon la revendication 1, caractérisé en ce que le bras précité (21) se termine par une extrémité sensiblement en forme d'étrier (28) dans lequel se situent les extrémités des demi-plaques (9, 10) et comporte une lumière (26) coulissant sur un doigt (27) ou analogue solidaire du bâti du convoyeur (1).

3. Convoyeur selon la revendication 1 ou 2, caractérisé en ce que les manchons (23) et leurs poussoirs associés (24) susceptibles d'agir sur les récipients (R) portés par les demi-plaques (9, 10) peuvent être animés d'un mouvement de translation verticale relatif par un arbre moteur (32) commandant la première (22) et la deuxième barre (25) précitées par l'intermédiaire d'un système de biellettes ou leviers articulés (35, 36, 40, 41, 42, 44).

## Ansprüche

1. Förderer mit dem Transport von Gegenständen wie zum Beispiel Behältern (R) gestattenden Platten und derjeniger Gattung, die zwei Paare von endlosen parallelen Ketten oder dergleichen (C$_1$-C$_4$, C$_2$-C$_3$) umfasst, an welche jeweils Querplatten angebracht sind, die fähig sind, die besagten Gegenstände aufzunehmen und je aus zwei Halbplatten (9, 10) bestehen, welche gleichzeitig oder auch getrennt mitgenommen werden können, um die Gegenstände zu erfassen oder loszulassen, dadurch gekennzeichnet, dass jede Halbplatte (9, 10) an ihren beiden Enden ein eine Wange bildendes Element (16) aufweist, das über einen Bolzen (17) an einem, an den Ketten angebrachten, Halter (18) schwenkbar angeordnet ist, wobei das Oeffnen oder das Schliessen durch Verschwenken dieser Halbplatten durch einen die Enden der Halbplatten betätigenden Arm oder dergleichen (21) gewährleistet wird, der selbst durch eine erste Stange (22) angetrieben wird, welche Muffen (23) trägt, die gleitbar in diesen Muffen angeordnete und durch eine zweite Stange (25) getragene Stössel (24) enthalten.

2. Förderer nach Anspruch 1, dadurch gekennzeichnet, dass der vorgenannte Arm (21) mit einem im wesentlichen bügelförmigen Ende (28) endet, in welchem sich die Enden der Halbplatten (9, 10) befinden und ein, an einem an dem Rahmen des Förderers (1) angebrachten Finger (27) oder dergleichen gleitendes, Schlitzloch (26) aufweist.

3. Förderer nach Anspruch 1 oder 2, dadurch gekennzeichnet, dass die Muffen (23) und deren zugeordneten Stössel (24), die fähig sind, auf die von den Halbplatten (9, 10) getragenen Behälter (R) einzuwirken, gemäss einer relativen senkrechten Translationsbewegung durch eine, über ein System von Anlenkstangen bzw. -hebeln (35, 36, 40, 41, 42, 44) die erste und die zweite vorgenannte Stange (22 und 25) betätigende, Antriebswelle (32) angetrieben werden können.

## Claims

1. Conveyor with plates allowing the transport of objects such for example as containers (R) and of the type comprising two pairs of endless parallel chains or the like (C$_1$-C$_4$, C$_2$-C$_3$) to which are respectively coupled transverse plates susceptible of receiving the said objects and consisting each one of two half-plates (9, 10) which may be driven simultaneously and also separately for gripping or releasing the objects, characterized in that each half-plate (9, 10) comprises at its two ends a cheek-forming element (16) pivotally mounted through the medium of an axis (17) onto a support (18) made fast to the chains, the opening or the closing through pivoting of these half-plates is provided by an arm or the like (21) actuating the ends of the half-plates and itself operated by a first bar (22) supporting sleeves (23) containing pushers (24) slidably mounted within these sleeves and supported by a second bar (25).

2. Conveyor according to claim 1, characterized in that the aforesaid arm (21) ends into an end substantially in the shape of a stirrup (28) in which are located the ends of the half-plates (9, 10) and comprises a slot (26) sliding on a finger (27) or the like made fast to the frame of the conveyor (1).

3. Conveyor according to claim 1 or 2, characterized in that the sleeves (23) and their associated pushers (24) susceptible of acting upon the containers (R) carried by the half-plates (9, 10) may be moved according to a relative vertical translatory motion by a drive shaft (32) operating the first (22) and the second (25) aforesaid bars through the medium of a system of pivotally connected links or levers (35, 36, 40, 41, 42, 44).

6

2

4

5

6

7

8

R

R R R

R₁

1

50

VI

_Fig. 1_

Fig. 2

Fig. 3

EP 0 286 514 B1

Fig. 5

FIG.6

FIG 7

EP 0 286 514 B1

Fig. 4

Fig. 8    Fig. 9    Fig. 10    Fig. 11    Fig. 12